# EUROPEAN PATENT APPLICATION

(11) **EP 2 014 395 A1**
(43) Date of publication of application: **14.01.2009**
(21) Application number: 08160157.7
(22) Date of filing: 10.07.2008
(51) Int. Cl.: B23B 1/00, F02C 7/28

(54) **A machining method and a blocking tool of an oil retainer seal of an exhaust case of a turbine**

(30) Priority: 11.07.2007 IT MI20071385
(71) Applicant: ANSALDO ENERGIA S.P.A., 16152 Genova (IT)
(72) Inventor: Giovanelli, Pier Luigi, 16157 Genova (IT); Talatin, Marco, 16152 Genova (IT); Papalia, Vincenzo, 16157 Genova (IT)
(74) Representative: Jorio, Paolo

(57) **Abstract**

A method for machining an oil retainer seal (2) of an exhaust case of a turbine includes blocking the oil retainer seal (2) by means of a blocking tool (1); and machining the oil retainer seal (2) by turning along an internal cylindrical face (4) of the oil retainer seal (2).

## Description

The present invention relates to a method for machining an oil retainer seal of an exhaust case of a turbine and to a tool for blocking an oil retainer seal of an exhaust case of a turbine when machining the oil retainer seal.

A known type of gas turbine extends along a longitudinal axis and includes a rotor, which is coaxial to the longitudinal axis of the turbine and rotates about the longitudinal axis; an exhaust case, in which the gases produced by the combustion chamber flow before being expelled; and an oil retainer, which separates the lubrication zone of the rotor from the exhaust case to prevent a mixing of the gases flowing in the exhaust case with the oil used for lubricating the rotor.

The oil retainer is essentially a sealing ring, which extends about the rotor and includes a metal seal, which is arranged along the internal surface of the oil retainer and is made of metal foils essentially arranged so as to form an array of equally spaced rings adapted to prevent the passage of both the lubricating oil and the gases. Specifically, the metal foils must be made so as to leave a thin gap between the foils and the surface of the rotor, which will be occupied in use by a thin oil film which contributes to the correct sealing action of the oil retainer seal.

Air, conveyed by means of specific channels, circulates between each metal foil, which contributes to cool the foils and creates a pressure on the foils which counters the pressure generated by the gases, so as to prevent the gases from flowing into the lubrication zone of the rotor and, vice versa, the oil from seeping into the gas passage zone.

The pressures to which the foils are continuously subjected, however, cause a wear of the foils themselves, which worsens the tightness of the oil retainer.

Indeed due to this wear, plant maintenance protocols require the periodical replacement of the oil retainer foils as a precautionary measure.

The new foils to be used for the replacement must be machined by turning before being installed so as to make them comply with the rotor about which they are arranged. Indeed, the new foils of the oil retainer must be custom-made on the basis of the diameter of the rotor and with extreme accuracy to ensure an optimal seal of the oil retainer.

Usually, the machining by turning of the oil retainer foils is performed at the workshop and provides for new foils being firstly mounted on the oil retainer and then turned. However, this type of procedure requires to disassemble the oil retainer and to transport the oil retainer from the plant to the workshop, with evident disadvantages.

Firstly, the disassembly of the oil retainer requires to disassemble the exhaust case and to handle the exhaust case to allow the disassembly of the oil retainer. This implies long working times and a high safety risk for operators because the exhaust case weighs approximately 25 tons.

Secondly, the repeated disassembly of the oil retainer on the long term causes a damage to the screws for assembling the oil retainer and to the threaded screw seats, which are already highly stressed by the high temperatures of the gases.

Finally, shipping the oil retainer to the workshop implies high costs and times, sometimes prohibitive for the system manager.

It is an object of the present invention to provide a method for machining an oil retainer seal of an exhaust case of a turbine which is free from the drawbacks of the prior art herein illustrated; specifically, it is an object of the invention to provide a method which does not require to disassemble the oil retainer for machining the oil retainer foils while being fast and effective.

In accordance with such objects, the present invention relates to a method for machining an oil retainer seal of an exhaust case of a turbine; the oil retainer seal being essentially shaped as a circular ring and having an internal cylindrical face, an external cylindrical face and two annular faces; the method being characterized by blocking the oil retainer seal by means of a blocking tool; and machining the oil retainer seal by turning along the internal cylindrical face.

It is a further object of the present invention to make a blocking tool of the oil retainer seal when machining the oil retainer seal. In accordance with such objects, the present invention relates to a blocking tool of an oil retainer seal of an exhaust case of a turbine; the oil retainer seal being essentially shaped as a circular ring and having an internal cylindrical face, at least one external cylindrical face and two annular faces; the tool including an annular vice adapted to block the oil retainer seal when machining the oil retainer seal.

Further features and advantages of the present invention will be apparent from the following description of a non-limitative embodiment thereof, with reference to the figures in the accompanying drawings, in which:
- figure 1 is an exploded, perspective view of the blocking tool of an oil retainer seal of a turbine according to the present invention;
- figure 2 is a perspective view, with parts in section and parts removed for clarity, of a first detail of the tool in figure 1;
- figure 3 is a perspective view, with parts in section and parts removed for clarity, of a second detail of the tool in figure 1;
- figure 4 is a perspective view, with parts in section and parts removed for clarity, of a third detail of the tool in figure 1 during a first step of the method according to the present invention;
- figure 5 is a perspective view, with parts in section and parts removed for clarity, of the third detail in figure 4 during a second step of the method according to the present invention; and
- figure 6 is a perspective view, with parts in section and parts removed for clarity, of the third detail in figure 4 during a third step of the method according to the present invention.

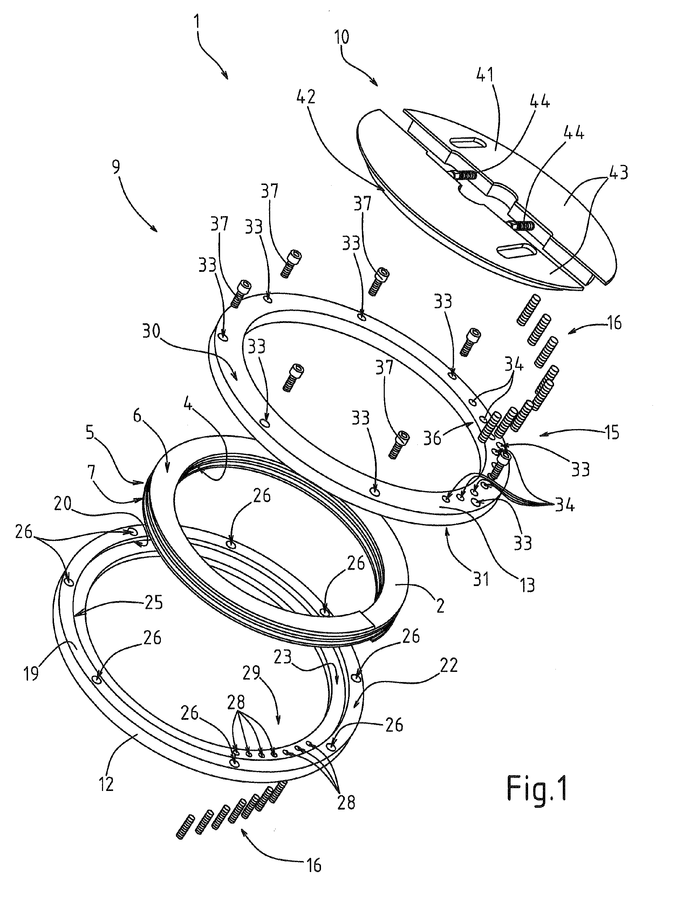

In figure 1, numeral 1 indicates a tool for blocking a seal 2 of an oil retainer (not shown for simplicity) of an exhaust case of a turbine according to the present invention. The oil retainer of the exhaust case may belong either to a gas turbine or to a steam turbine.

The oil retainer seal 2 is made of metal and defines an internal cylinder face 4, an external cylindrical face 5 and two external annular faces 6 and 7.

Specifically, the oil retainer seal 2 preferably includes a helically wound metal foil. The internal cylindrical face 4 is thus defined by the internal cylindrical faces of each ring of the helix, while the external cylindrical face 5 is defined by the external cylindrical faces of each ring of the helix. The external annular faces 6 and 7 are instead defined by the annular faces of the external rings of the helix.

The tool 1 includes an annular vice 9, adapted to block the oil retainer seal 2 when machining by turning the oil retainer seal 2, and expanders 10 of the oil retainer seal 2, which are adapted to appropriately spread the oil retainer seal 2 before it is blocked by the annular vice 9 and are removable.

The annular vice 9 includes a first ring- shaped jaw 12, a second ring-shaped jaw 13, connectors 15 of the first and second ring-shaped jaws 12 and 13 and a plurality of spacers 16.

The first ring-shaped jaw 12 is essentially shaped as a circular ring and includes an annular ridge 19, which extends along the external periphery of the first ring-shaped jaw 12 and defines a cylindrical edge 20 facing the inside of the first ring-shaped jaw 12, a first annular face portion 22 of the first ring-shaped jaw 12 and a second annular face portion 23 lowered with respect to the first annular face portion 22. The cylindrical edge 20 and the second annular face portion 23 define an annular seat 25 adapted to be engaged by the oil retainer seal 2.

The first ring-shaped jaw 12 is provided along a first annular face portion 22 with a plurality of holes 26, which are reciprocally arranged at an essentially regular distance over the entire length of the first annular face portion 22 and are adapted to be engaged by the connectors 15. In the example shown in the accompanying figures, there are eight holes 26.

The first ring-shaped jaw 12 is provided along the second annular face portion 23 with a plurality of through holes 28, which are reciprocally arranged in an area 29 of the second annular face portion 23, at an essentially regular distance and are adapted to be engaged by corresponding spacers 16. In the example shown in the accompanying figures, there are seven holes 28.

The second ring-shaped jaw 13 is essentially shaped as a circular ring and is provided with an upper annular face 30 and with a lower annular face 31, adapted to be arranged in contact with the first ring-shaped jaw 12 and specifically with the first annular face portion 22, to clamp the oil retainer seal 2.

The second ring-shaped jaw 13 is provided with a plurality of through holes 33, which are reciprocally arranged at an essentially regular distance over the entire length of the second ring-shaped jaw 13 and are adapted to be engaged by the connectors 15. In the example shown in the accompanying figures, there are eight holes 33.

Furthermore, the second ring-shaped jaw 13 is provided with a plurality of through holes 34, which are reciprocally arranged in an area 36 of the upper annular face 30 at an essentially regular distance and are adapted to be engaged by corresponding spacers 16. In the example shown in the accompanying figures, there are ten holes 34.

The connectors 15 include a plurality of screws 37, which are adapted to engage the through holes 33 of the second ring-shaped jaw 13 and the holes 26 of the first ring-shaped jaw 12, respectively, so as to clamp the oil retainer seal 2 accommodated in the annular seat 25 between the first and the second ring-shaped jaws 12 and 13. In the example of the accompanying figures, there are eight screws 37 which are of the Allen screw type.

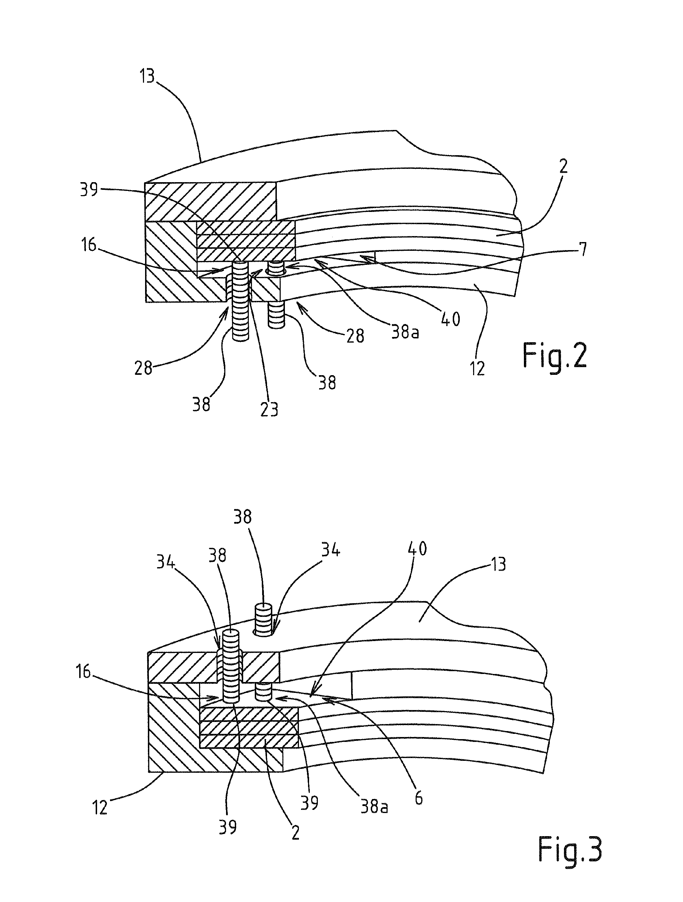

With reference to figures 2 and 3, each spacer 16 is arranged in abutment against one of the annular faces 6 or 7 of the oil retainer seal 2 and is adjustable in length with respect to the annular face 6 or 7 on which it abuts to compensate for the possible differences of level of the oil retainer seal 2 which prevent the oil retainer seal 2 from stably blocking with only the jaws 12 and 13. The spacers 16 are thus adapted to ensure an appropriate blocking of the oil retainer seal 2. In the example of the accompanying figures, the spacers 16 compensate for the differences of level due to the particular helical shape of the oil retainer seal 2.

With reference to figure 2, each spacer 16 is defined by a portion of a threaded pin 38 between the second annular face portion 23 of the first ring-shaped jaw 12 and the annular face 7 of the oil retainer seal 2.

With reference to figure 3, each spacer 16 is defined by a portion of a threaded pin 38 between the lower annular face 31 of the second ring-shaped jaw 13 and the annular face 6 of the oil retainer seal 2.

With reference to figures 2 and 3, the threaded pins 38 are adapted to be selectively screwed/unscrewed into the holes 28 of the first ring-shaped jaw 12 and/or into the holes 34 of the second ring-shaped jaw 13 to make the spacers 16 adjustable in length. Each threaded pin 38 must be fastened into the corresponding hole 28 or 34 so that an end 39 of the threaded pin 38 is arranged in abutment against a corresponding portion 40 of either the external annular face 6 or the external annular face 7 of the oil retainer seal 2.

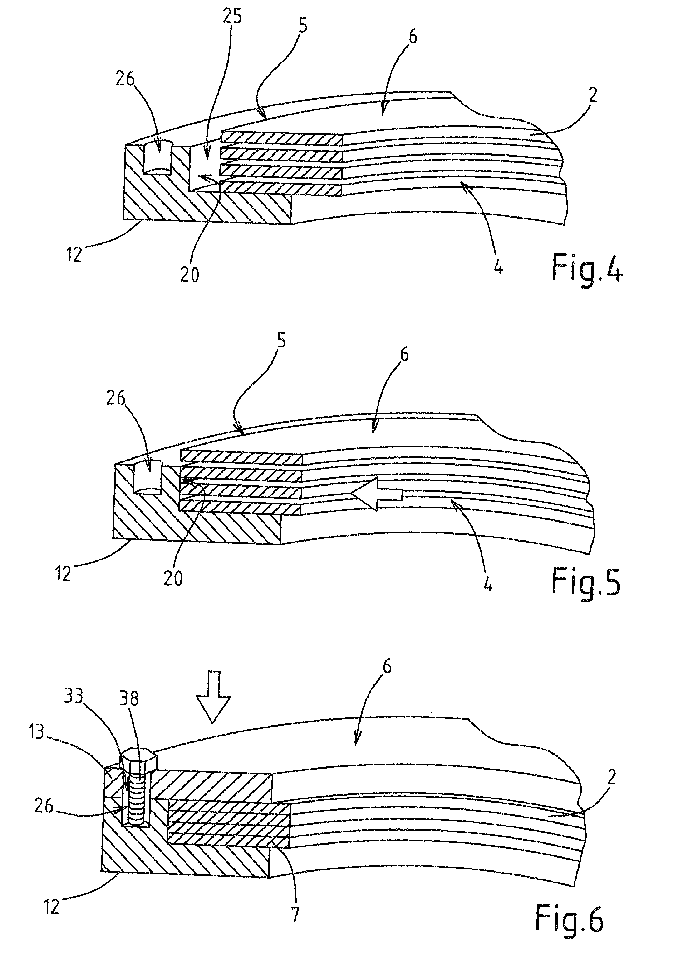

With reference to figure 1, the expanders 10 of the oil retainer seal 2 essentially include a selectively expandable member 41, which has a cylindrical side face 42 adapted to be arranged in abutment against the internal cylindrical face 4 of the oil retainer seal 2. The selectively expandable member 41 is adapted to spread the oil retainer seal 2 so that the external cylindrical face 5 of the oil retainer seal 2 is fully arranged in abutment against the cylindrical edge 20 of the first ring-shaped jaw 12 (see figure 5).

Specifically, the selectively expandable member 41 includes two half plates 43, preferably made of bakelite, which may be selectively moved either towards or away from each other by screwing or unscrewing the two threaded pins 44, each of which has ends inserted into the two half plates 43, respectively.

With reference to figures 4, 5 and 6, the method for machining the oil retainer seal 2 according to the present invention essentially includes blocking the oil retainer seal 2 by means of the above-described blocking tool 1 and machining the oil retainer seal 2 by turning.

Specifically, the method includes:
accommodating the oil retainer seal 2 in the annular seat 25 of the first ring-shaped jaw 12 (figure 4);
arranging the external cylindrical face 5 of the oil retainer seal 2 in abutment against the cylindrical edge 20 of the first ring-shaped jaw 12 (figure 5) by means of removable expanders 10 of the oil retainer seal 2 (see figure 1);
clamping the annular faces 6 and 7 of the oil retainer seal 2 between the first ring-shaped jaw 12 and the second ring-shaped jaw 13 (figure 6);
removing the expanders 10 of the oil retainer seal 2;
machining the internal cylindrical face 4 of the oil retainer seal 2 by turning.

Preferably, the step of arranging the external cylindrical face 5 of the oil retainer seal 2 abutting against the cylindrical edge 20 of the first ring-shaped jaw 12 (figure 5) is preceded by a step of pre-clamping the oil retainer seal 2 between the first and the second ring-shaped jaws 12 and 13, which essentially consists in partially screwing the screws 37 into the corresponding holes 33 and 26 of the second and first ring-shaped jaws 13 and 12.

The step of arranging the external cylindrical face 5 of the oil retainer seal 2 in abutment against the cylindrical edge 20 of the first ring-shaped jaw 12 includes arranging the selectively expandable member 41 so that the cylindrical side face 42 of the member 41 is arranged either in contact with or facing the internal cylindrical face 4 of the oil retainer seal 2; and expanding the member 41 by fastening the threaded pins 44 until the external cylindrical face 5 of the oil retainer seal 2 fully abuts against the cylindrical edge 20 of the first ring-shaped jaw 12.

The step of clamping the oil retainer seal 2 between the first and the second ring-shaped jaws 12 and 13 (figure 6) essentially includes fully screwing the screws 37 into the corresponding holes 33 and 26 of the second and first ring-shaped jaws 13 and 12; and arranging at least one threaded pin 38 through one of the holes 28 and/or 34 and fastening it so that the end 39 of the treaded pin 38 abuts against a corresponding portion 40 of one of the annular faces 6 or 7 of the oil retainer seal 2 and 12.

The step of removing the expanders 10 of the oil retainer seal 2 includes unscrewing the pins 44 of the member 41 and removing the member 41.

The step of machining by turning the internal cylindrical face 4 of the oil retainer seal 2 includes turning the internal cylindrical face 4 until the required internal diameter value of the oil retainer seal 2 is reached.

The present invention has the following advantages.

Firstly, the blocking tool 1 of the oil retainer seal of the exhaust case of the turbine and the method for machining the oil retainer seal allow avoiding the costly disassembly and transportation to the workshop of the oil retainer, and the dangerous handling of the exhaust case of the turbine. Indeed, in virtue of the method and tool according to the present invention the oil retainer does not need to be disassembled and the exhaust case is only removed from the turbine and arranged on the ground in a safe position to allow the operators accessing the oil retainer and replace the oil retainer seal. With the known techniques, the exhaust case needed to be kept suspended in order to allow the rotation thereof, required for disassembling the oil retainer with apparent disadvantages.

Secondly, in virtue of the method and tool according to the present invention, the times and costs for replacing the oil retainer seal are considerably reduced, because it is no longer necessary to transport, disassemble and reassemble the oil retainer.

It is finally apparent that changes and variations may be made to the tool and method described herein without departing from the scope of the appended claims.

## Claims

1. A method for machining an oil retainer seal (2) of an exhaust case of a turbine; the oil retainer seal (2) being essentially shaped as a circular ring and having an internal cylindrical face (4), an external cylindrical face (5) and two annular faces (6, 7); the method being **characterized by** blocking the oil retainer seal (2) by means of a blocking tool (1); and machining the oil retainer seal (2) by turning along the internal cylindrical face (4).

2. A method according to claim 1, **characterized by** blocking the oil retainer seal (2) by means of an annular vice (9).

3. A method according to claim 2, **characterized by** clamping the annular faces (6, 7) of the oil retainer seal (2) between a first ring-shaped jaw (12) and a second ring-shaped jaw (13) of the annular vice (9).

4. A method according to claim 3, **characterized by** accommodating the oil retainer seal (2) in an annular seat (25) of the first ring-shaped jaw (12).

5. A method according to claim 4, **characterized by** arranging the external cylinder face (5) of the oil retainer seal (2) in abutment against a cylinder edge (20) of the annular seat (25) of the first ring-shaped jaw (12).

6. A method according to claim 5, **characterized by** expanding the oil retainer seal (2) in an essentially even way towards said cylindrical edge (20) of the annular seat (25) by means of expanding means (10) of the oil retainer seal (2).

7. A method according to claim 6, **characterized by** expanding the oil retainer seal (2) in an essentially even way by means of a selectively expandable circular member (41), which acts on the internal cylindrical face (4) of the oil retainer seal (2).

8. A method according to anyone of the claims from 3 to 7, **characterized by** coupling the first ring-shaped jaw (12) to the second ring-shaped jaw (13) by means of connecting means (15).

9. A method according to claim 8, **characterized by** coupling the first ring-shaped jaw (12) with the second ring-shaped jaw (13) by means of a plurality of screws (38) screwed into first and second holes (26, 33) of the first and second ring-shaped jaws (12, 13), respectively.

10. A method according to anyone of the claims from 3 to 9, **characterized by** arranging at least one spacer (16) in abutment against the corresponding portion (40) of at least one of the annular faces (6, 7) of the oil retainer seal (2).

11. A method according to claim 10, **characterized by** adjusting the length of the spacer (16) with respect to the corresponding portion (40) of the annular face (6; 7) of the oil retainer seal (2).

12. A method according to claim 11, **characterized by** screwing a threaded pin (38) either into a third hole (28) or into a fourth hole (34) of the first and second ring-shaped jaws (12, 13), respectively; the pin portion (38) between the first ring-shaped jaw (12), or the second ring-shaped jaw (13), and one of the annular faces (6, 7) of the oil retainer seal (2) defining the spacer (16).

13. A method according to anyone of the claims from 1 to 12, **characterized in that** the oil retainer seal (2) includes a helically wound metal foil.

14. A blocking tool of an oil retainer seal (2) of an exhaust case of a turbine; the oil retainer seal (2) being essentially shaped as a circular ring and having an internal cylindrical face (4), at least one external cylindrical face (5) and two annular faces (6, 7); the tool (1) including an annular vice (9) adapted to block the oil retainer seal (2) when machining the oil retainer seal (2).

15. A tool according to claim 14, **characterized in that** the annular vice (9) includes a first ring-shaped jaw (12), a second ring-shaped jaw (13) and connecting means (15) of the first and second ring-shaped jaws (12, 13).

16. A tool according to claim 15, **characterized in that** the first ring-shaped jaw (12) includes a ring-shaped ridge (19), which extends along the external periphery of the first ring-shaped jaw (12) and defines a cylindrical edge (20) of an annular seat (25) adapted to accommodate the oil retainer seal (2).

17. A tool according to claim 16, **characterized in that** the ridge (19) of the first ring-shaped jaw (12) includes a plurality of first holes (26) adapted to be engaged by the connecting means (15).

18. A tool according to anyone of the claims from 15 to 17, **characterized in that** the second ring-shaped jaw (13) includes a plurality of second holes (33) adapted to be engaged by the connecting means (15).

19. A tool according to claim 17 or 18, **characterized in that** the connecting means include a plurality of screws.

20. A tool according to anyone of the claims from 15 to 19, **characterized in that** it includes at least one spacer (16) adapted to be arranged in abutment against a corresponding portion (40) of at least one of the annular faces (6, 7) of the oil retainer seal (2).

21. A tool according to claim 20, **characterized in that** the spacer (16) is adjustable in length according to the corresponding portion (40) of one of the annular faces (6, 7).

22. A tool according to claim 20 or 21, **characterized in that** the first ring-shaped jaw (12) includes at least a third hole (28), and **in that** the second ring-shaped jaw (13) includes at least one fourth hole (34).

23. A tool according to claim 22, **characterized in that** it includes at least one threaded pin (38) adapted to be screwed either into the third hole (28) of the first ring-shaped jaw (12) or into the fourth hole (34) of the second ring-shaped jaw (13); the spacer (16) being defined by a pin portion (38) between the first ring-shaped jaw (12), or the second ring-shaped jaw (13), and one of the annular faces (6,7).

24. A tool according to anyone of the claims from 14 to 23, **characterized in that** it includes expanding means (10) of the oil retainer seal (2).

25. A tool according to claim 24, **characterized in that** the expanding means (10) of the oil retainer seal (2) include a selectively expandable circular member (41), which is adapted to act on the internal cylindrical face (4) of the oil retainer seal (2).

26. A tool according to claim 25, **characterized in that** the selectively expandable member (41) includes two half-plates (43) which may be selectively moved either away from or towards each other by screwing or unscrewing the threaded pins (44).
